# EUROPÄISCHE PATENTSCHRIFT

(11) **EP 2 895 630 B1**
(45) Veröffentlichungstag und Bekanntmachung des Hinweises auf die Patenterteilung: **07.06.2023**
(21) Anmeldenummer: 13763210.5
(22) Anmeldetag: 10.09.2013
(51) Int. Cl.: C21B 13/00, C25B 1/04, C21B 13/14, C22C 37/00, C22C 38/00

(54) **VERFAHREN ZUM SPEICHERN DISKONTINUIERLICH ANFALLENDER ENERGIE BEIM REDUZIEREN VON EISENERZ**
METHOD FOR STORING DISCONTINUOUSLY OBTAINED ENERGY IN REDUCTION PROCESS OF IRON ORE
PROCÉDÉ DE STOCKAGE D'ÉNERGIE PRODUITE EN DISCONTINU DANS UN PROCÉDÉ DE RÉDUCTION DE MINERAIS DE FER

(30) Priorität: 14.09.2012 DE 102012108631; 28.09.2012 DE 102012109284; 19.04.2013 DE 102013104002
(43) Veröffentlichungstag der Anmeldung: 22.07.2015
(73) Patentinhaber: Voestalpine Stahl GmbH, 4020 Linz (AT)
(72) Erfinder: SCHWAB, Peter, 4020 Linz (AT); EDER, Wolfgang, 4020 Linz (AT); BÜRGLER, Thomas, 4221 Steyregg (AT)
(74) Vertreter: HGF
(86) Internationale Anmeldenummer: PCT/EP2013/068727
(87) Internationale Veröffentlichungsnummer: WO 2014/040990

(56) Entgegenhaltungen:
- EP-A1- 1 160 337
- EP-A1- 2 426 236
- WO-A1-00/49184
- WO-A2-2009/019159
- WO-A2-2011/116141
- CN-A- 102 424 873
- DE-C1- 19 838 368
- GB-A- 846 284
- GB-A- 2 001 671
- US-A- 1 167 016
- US-A- 4 054 444
- US-A- 5 454 853
- US-A1- 2009 249 922
- US-A1- 2013 137 783
- Christoph Gutschi: "Potenziale und Hemmnisse für Power Demand Side Management in Osterreich", , 15 February 2008 (2008-02-15), XP055634304, Retrieved from the Internet: URL:https://graz.pure.elsevier.com/de/publ ications/potenziale-und-hemmnisse-f%C3%BCr -power-demand-side-management-in-%C3%B6ste [retrieved on 2019-10-21]
- Janzing Bernward: "Industrie als EnergieSpeicher", , 23 July 2012 (2012-07-23), XP055634302, Retrieved from the Internet: URL:https://www.dw.com/de/industrie-als-en ergiespeicher/a-16090684-0 [retrieved on 2019-10-21]
- Knop Klaus ET AL: "Prozeßtechnik und Wirtschaftlichkeit der Stahlerzeugung über Direktreduction auf Wasserstoffbasis", , 30 November 1996 (1996-11-30), pages 1-10, XP055852388, Retrieved from the Internet: URL:unknown [retrieved on 2021-10-18]

## Beschreibung

Die Erfindung betrifft ein Verfahren zum Speichern diskontinuierlich anfallender Energie.

Der Anteil an regenerativen Energien soll weltweit gesteigert werden, wobei regenerative Energie einerseits Energie aus nachwachsenden Rohstoffen aber auch aus Wasserkraft, Sonnenlicht und Wind umfasst. Durch die Nutzung nachwachsender Rohstoffe kann häufig kontinuierlich Energie erzeugt werden, beispielsweise in Biomassekraftwerken oder Biogaserzeugungsanlagen.

Aus der Schrift "Potenziale und Hemmnisse für Power Demand Side Management in Österreich" von Ch. Gutchi (15. Februar 2008) ist die Verwendung regenerativer Energie im industriellen Bereich bekannt. Die Schrift befasst sich mit einer möglichen Energieeinsparung bzw. -Verteilung in der Abhängigkeit von der Produktionsauslastung. Es wird vorgeschlagen, in den Monaten, in welchen die Auslastung geringer ist, den Betrieb einzustellen bzw. die Maschinen abzuschalten oder das Produkt bis zur weiteren Verwendung in Silos zu lagern.

Aus der Schrift "Industrie als Energiespeicher" von J. Bernward (23. Juli 2012) ist es bekannt, den Energieverbrauch zu reduzieren, indem der Produktionsbetrieb zeitweise eingestellt wird. Es ist ebenfalls bekannt, den Energieverbrauch durch Produktionsverschiebung zu reduzieren, sodass es in Zeiten günstiger Energie auf Vorrat produziert und das Produkt gelagert wird.

Aus der US1.167.016 ist die Reduktion von Eisenerzen und anderen Metalloxiden in den metallischen Zustand mittels Wasserstoff bekannt, bekannt

Bei der Nutzung von Sonnen- und Windenergie wird jedoch aufgrund der Abhängigkeit vom Wetter diskontinuierlich Energie erzeugt. Diese diskontinuierlich erzeugte Energie liegt nicht immer dann vor, wenn sie eigentlich gebraucht werden würde, so dass ein Problem darin besteht diese Energie zu speichern und zur Verfügung zu stellen wenn diese Energie gebraucht wird.

Insbesondere ist es bei dieser diskontinuierlich erzeugten Energie schwer diese Energie in einer Form zu speichern, die ohne Weiteres für den Endverbraucher oder für die Einspeisung in Netzwerke für Endverbraucher sofort nutzbar zu machen. US2009249922, WO2011116141, US5454853 und CN102424873 offenbaren alle die Verwendung erneuerbarer Energien zur Erzeugung von Wasserstoff durch einen Elektrolyseprozess wobei der Wasserstoff bei der Herstellung von direkt reduziertem Eisen weiter verwendet wird.

Aufgabe dieser Erfindung ist es, ein Verfahren zum Speichern der diskontinuierlich erzeugten Energie zu schaffen.

Diese Aufgabe wird mit einem Verfahren mit den Merkmalen des Anspruchs 11 gelöst. Vorteilhafte Weiterbildungen sind in Unteransprüchen gekennzeichnet.

Erfindungsgemäß wird nicht versucht, diskontinuierlich erzeugte Energie in ihrer ursprünglichen erzeugten Form zu nutzen sondern die Energie für die Erzeugung eines leicht lagerbaren Zwischenproduktes zu nutzen und somit in diesem Zwischenprodukt einzubinden, wobei es sich bei dem Zwischenprodukt um ein Produkt handelt welches weltweit benötigt wird. Dieses Zwischenprodukt wird beim Vorliegen der diskontinuierlichen Energie unabhängig vom Bedarf am Zwischenprodukt erzeugt und gelagert und bei Bedarf der Weiterverarbeitung zugeführt. Da die Erzeugung des Zwischenproduktes ohnehin große Mengen an Energie verbraucht wird der Energieverbrauch der ansonsten bei der Produktion anfallen würde zeitlich und örtlich verlagert.

Erfindungsgemäß wird als Endprodukt zum Beispiel Metall, insbesondere Stahl erzeugt. Grundsätzlich ist das erfindungsgemäße Verfahren für alle industriellen Produktionen geeignet, bei denen ein lagerfähiges Zwischenprodukt anfällt.

Hierbei ist von Vorteil, dass bei der Speicherung der diskontinuierlich angefallenen Energie hierbei keine Rückführung aus einem, wie auch immer gearteten Speichermedium in die Ursprungsenergie notwendig ist, sondern die Ursprungsenergie sinnvoll genutzt in dem Zwischenprodukt gespeichert ist und zur Erzeugung des Zwischenproduktes am Produktionsstandort des Endproduktes nicht erneut Energie aufgewendet werden muss.

Die Erfindung wird beispielhaft anhand einer Zeichnung erläutert. Es zeigen hierbei:

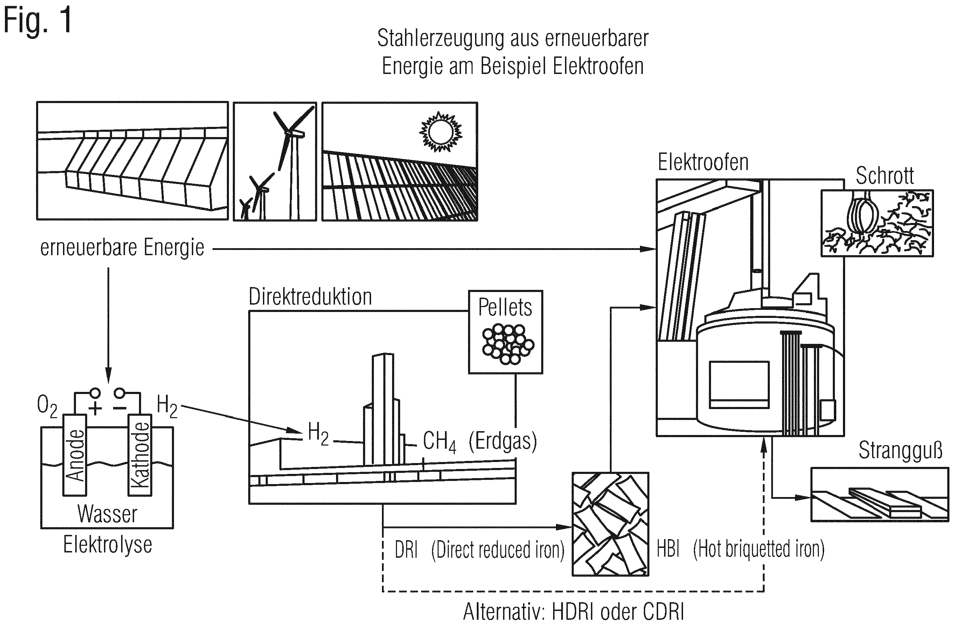

Figur 1das erfindungsgemäße Verfahren in einer beispielhaften Ausführungsform (Elektrolichtbogenofen) im Überblick;

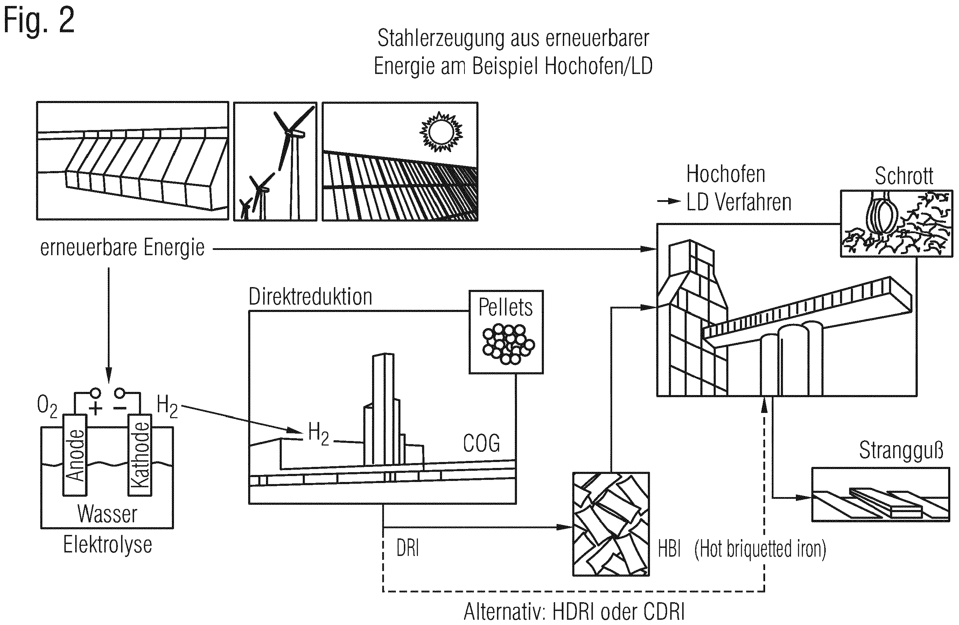

Figur 2das erfindungsgemäße Verfahren in einer zweiten beispielhaften Ausführungsform (LD-Verfahren) im Überblick;

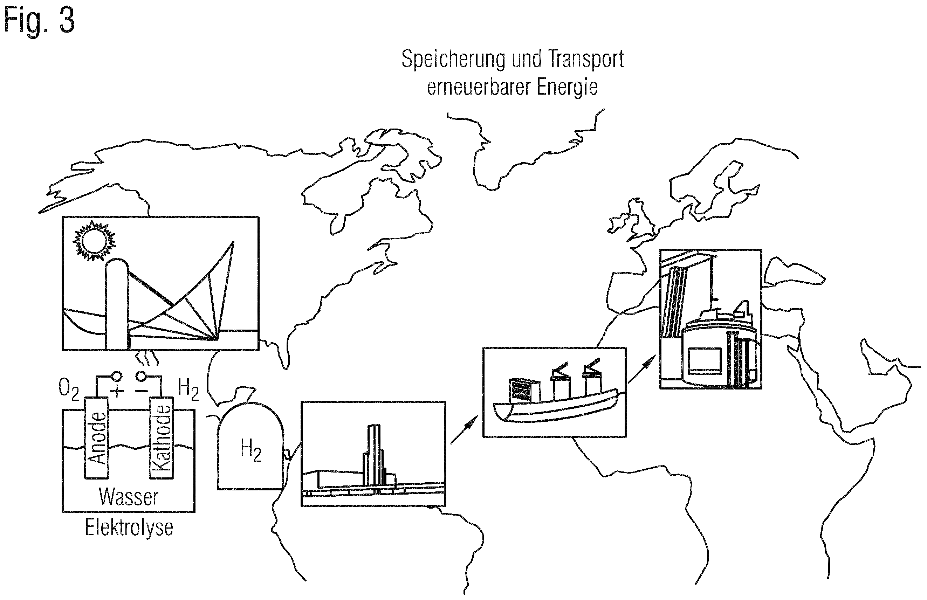

Figur 3die Stoff- und Energieströme schematisch.

Erfindungsgemäß handelt es sich bei dem Zwischenprodukt um ein Zwischenprodukt welches mit recht hohem Energieaufwand gefertigt werden muss, insbesondere beispielsweise Zwischenprodukte für die ein Schmelzprozess und/oder Reduktionsprozess erforderlich ist, der insbesondere mit Hilfe von Strom, d. h. beispielsweise im Lichtbogen erfolgt. Insbesondere kann jedoch dieses Zwischenprodukt auch aus vor allem oxidischen Eisenträgern direkt reduziertes Eisen z. B. in Form eines Eisenschwamms bzw. sogenannten Hot Briquetted Iron (HBI) sein. Der Einsatz der diskontinuierlich vorliegenden regenerativen Energie bzw. die Speicherung derselben in dem Zwischenprodukt hat zudem den Vorteil, dass klimaneutral gearbeitet werden kann.

Die Stahlerzeugung wird zur Zeit auf unterschiedliche Arten vorgenommen. Die klassische Stahlerzeugung erfolgt über die Erzeugung von Roheisen im Hochofenprozess aus vorwiegend oxidischen Eisenträgern. Bei diesem Verfahren werden ca. 450 bis 600 kg Reduktionsmittel, zumeist Koks, pro Tonne Roheisen verbraucht, wobei dieses Verfahren sowohl bei der Erzeugung von Koks aus Kohle als auch bei der Erzeugung des Roheisens ganz erhebliche Mengen CO₂ freisetzt. Zudem sind sogenannte "Direktreduktionsverfahren" bekannt (Verfahren entsprechend der Marken, MIDREX, FINMET, ENERGIRON/HYL,etc.), bei denen aus vorwiegend oxidischen Eisenträgern der Eisenschwamm in der Form von HDRI (Hot Direct Reduced Iron), CDRI (Cold Direct Reduced Iron) bzw. sogenanntes HBI (hot briquetted iron) erzeugt wird.

Zudem gibt es noch sogenannte Schmelzreduktionsverfahren, bei denen der Schmelzprozess, die Reduktionsgaserzeugung und die Direktreduktion miteinander kombiniert werden, beispielsweise Verfahren der Marken COREX, FINEX, HiSmelt oder HiSarna.

Eisenschwamm in der Form von HDRI , CDRI bzw. HBI werden üblicherweise in Elektroöfen weiter verarbeitet, was außerordentlich energieintensiv ist. Die Direktreduktion wird mittels Wasserstoff und Kohlenstoffmonoxid aus Methan und ggf. Synthesegas vorgenommen. Beispielsweise wird beim sogenannten MIDREX-Verfahren zunächst Methan entsprechend der folgenden Reaktion umgesetzt:

CH₄ + COz = 2CO + 2H₂

und das Eisenoxid reagiert mit dem Reduktionsgas beispielsweise nach:

Fe₂O₃ + 6CO(H₂) = 2Fe + 3CO₂ (H₂O) + 3 CO(H₂).

Auch dieses Verfahren stößt somit COz aus.

Aus der DE 198 53 747 C1 ist ein kombinierter Prozess zur Direktreduktion von Feinerzen bekannt, wobei die Reduktion mit Wasserstoff oder einem anderen Reduktionsgas in einer liegenden Wirbelschicht erfolgen soll.

Aus der DE 197 14 512 A1 ist eine Kraftwerksanlage mit Solargewinnung, Elektrolyseeinrichtung und einem industriellen Metallurgieprozess bekannt, wobei dieser industrielle Prozess entweder die stromintensive Metallherstellung von Aluminium aus Bauxit betrifft oder ein Metallurgieprozess mit Wasserstoff als Reduktionsmittel bei der Herstellung von nichtheißen Metallen wie Wolfram, Molybdän, Nickel oder dergleichen oder ein Metallurgieprozess mit Wasserstoff als Reduktionsmittel unter Anwendung des Direktreduktionsverfahren bei der Herstellung von Eisenmetallen sein soll. Dies wird in dieser Schrift jedoch nicht weiter ausgeführt.

Aus der WO 2011/018124 sind Verfahren und Anlagen zum Bereitstellen speicherbaren und transportablen kohlenstoffbasierter Energieträger unter Einsatz von Kohlendioxid und unter Einsatz von regenerativer elektrischer Energie und von fossilen Brennstoffen bekannt. Hierbei werden ein Anteil von regenerativ erzeugtem Methanol und ein Anteil von Methanol bereitgestellt, der mittels nicht regenerativer elektrischer Energie und/oder mittels Direktreduktion und/oder über partielle Oxidation und/oder Reformierung erzeugt wird.

Erfindungsgemäß wird das Zwischenprodukt für die Stahlherstellung mittels Hochofen und nachfolgendem LD-Verfahren bzw. Elektrolichtbogenofen mit regenerativer Energie erzeugt und dadurch gespeichert. Ein besonderer Vorteil ist, dass das mittels regenerativer Energie erzeugte Zwischenprodukt bis zu seiner Weiterverarbeitung lagerbar ist, was bedeutet, dass mit dem erfindungsgemäßen Verfahren eine Speicherung regenerativer Energie möglich ist. Genau diese Speicherung regenerativer Energie stellt bislang ein sehr großes Problem dar, da insbesondere elektrische Energie, welche aus Wind oder Sonne gewonnen wird, von klimatischen Bedingungen abhängig ist, die nicht immer gleich sind. Auch aus Wasserkraft gewonnene elektrische Energie steht nicht immer zur Verfügung. Oftmals liegen die Verbraucher nicht an denselben Orten der Erzeugung von regenerativer Energie. Dieses Problem der Speicherung und nachfolgend der Mobilität der gespeicherten Energie wird mittels der Erfindung gelöst, da das erfindungsgemäß erzeugte Zwischenprodukt in kleinen Einheiten in beliebiger Menge beispielsweise durch Schiffstransport effizient an beliebige Orte transportiert werden kann.

Zwar wird die Energie bei dem erfindungsgemäßen Verfahren eben nicht in einer Form gespeichert die quasi für jedermann und für den allgemeinen Verbrauch aus dem Speicher abrufbar ist, jedoch ist der Bedarf an bestimmten Zwischenprodukten weltweit so hoch, dass dadurch, dass erfindungsgemäß das Zwischenprodukt den Energiespeicher darstellt für andere Energiebedarfsformen z. B. für Stromendkunden elektrische Energie aus anderen Quellen oder anderen Speichern zur Verfügung steht, so dass der Gesamtenergiehaushalt besser verwaltbar und disponierbar wird.

Insbesondere kann das erfindungsgemäße Verfahren in Gegenden der Erde betrieben werden in denen der Rohstoff für das Zwischenprodukt und die entsprechende diskontinuierlich erzeugte regenerative Energie am selben Ort auftreten. Als Beispiel hierfür seien genannt Magnesialagerstätten zur Erzeugung von Schmelzmagnesia (z. B. zur Verwendung in der Feuerfestindustrie) wie es beispielsweise in Kanada oder China vorkommt und dementsprechend die Verwendung von beispielsweise Wasserkraft oder Windenergie oder (China) Solarenergie. Bei Eisenerzen die in Direktreduktionsverfahren in das entsprechende Zwischenprodukt umgewandelt werden sollen wären derartige Standorte z. B. Schweden bzw. Norwegen (Wasserkraft) oder Australien (Sonnenenergie) bei denen die regenerative Energie dazu verwendet wird, einerseits den entsprechenden Rohstoff, nämlich das Eisenerz mechanisch aufzubereiten (u.a. Brechen, Mahlen, Agglomerieren) und zudem Wasserstoff für die Direktreduktion zu erzeugen oder beispielsweise Holz zu pyrolysieren um entsprechende kohlenstoff- bzw. wasserstoffhältigen Gasströme zu erzeugen.

Das erfindungsgemäße Verfahren sieht vor, diese aus Wind-, Wasser- oder Sonnenenergie erzeugte elektrische Energie dafür zu nutzen, Wasserstoff aus Wasser im Wege der Elektrolyse zu erzeugen. Vorzugsweise am Ort der Erzeugung des Wasserstoffs wird eine Direktreduktionsanlage betrieben, in der - ebenfalls vorzugsweise insbesondere vollständig mit derart erzeugter elektrischer Energie - aufbereitete Eisenerze direkt reduziert werden. Das so gewonnene Zwischenprodukt, insbesondere hot briquetted iron HBI, HDRI oder CDRI stellt einen idealen Speicher dieser regenerativen Energie dar und kann unbegrenzt in großen Mengen gelagert werden und ist jeder Form des Transports zu einer weiterverarbeitenden Einrichtung zugänglich, insbesondere wenn es dort benötigt wird. Insbesondere kann dieses Zwischenprodukt am Ort seiner Entstehung dann in großen Mengen, die den momentanen Bedarf übersteigen, hergestellt werden, wenn die entsprechende elektrische Energie ausreichend zur Verfügung steht. Steht diese Energie nicht zur Verfügung, sind ausreichende Mengen des Zwischenprodukts und damit der Energie in gespeicherter Form vorhanden, um den Bedarf erfüllen zu können.

Durch das Betreiben eines entsprechenden Elektrolichtbogens, ebenfalls mit Energie aus Wind-, Wasser- oder Solarenergie, gelingt es, eine COz-freie Stahlerzeugung oder Schmelzerzeugung (z. B. Schmelzmagnesia) zu verwirklichen und zudem regenerative Energie zu speichern.

Erfindungsgemäß wird der Wasserstoff aus den regenerativen Prozessen mit kohlenstoff- bzw. wasserstoffhältigen Gasströmen, wie beispielsweise CH4, COG, Synthesegas usw., in einer Direktreduktionsanlage eingestzt. Das Verhältnis zwischen Wasserstoff aus den regenerativen Prozessen zu kohlenstoff- bzw. wasserstoffhältigen Gasströmen wird je nach Verfügbarkeit kontinuierlich variiert. Beispielsweise wird bei Vorliegen von sehr viel Wasserstoff dieser zu fast 100 % für die Direktreduktion verwendet, im Bedarfsfall kann aber auch auf reine kohlenstoff- bzw. wasserstoffhältige Gasströme (beispielsweise Erdgas, Biogas, Gas aus der Pyrolyse nachwachsender Rohstoffe) umgestellt werden.

Bevorzugt wird jedoch das Verfahren so betrieben, dass mittels regenerativer Energie bei deren Vorhandensein so viel Wasserstoff erzeugt wird, wie es die vorhandene Energie zulässt und diesen Wasserstoff für die Direktreduktion zu verwenden. Als kohlenstoff- bzw. wasserstoffhältige Gasströme kommen selbstverständlich auch Gasströme aus der Biogaserzeugung und Pyrolyse bzw. Synthesegas aus Biomasse also nachwachsende Rohstoffe in Frage.

Überschüssiger Wasserstoff, welche nicht unmittelbar verbraucht werden kann, kann zwischengespeichert werden.

Diese Zwischenspeicherung des Wasserstoffs kann beispielsweise in einem Gasometer verwendet werden und die Einstellung der Gehalte an kohlenstoff- bzw. wasserstoffhältigen Gasströmen kann über eine Prognosesteuerung erfolgen. Diese Prognosesteuerung kann den prognostizierten Anfall/Erzeugungsmenge von Wasserstoff bzw. regenerativer Energie messen, des Weiteren aber auch beispielsweise Wettervorhersagen um die Erzeugungsmenge an regenerativer Energie abschätzen zu können. Darüber hinaus kann in diese Prognosesteuerung auch Bedarfsvorhersagen anderer externer Verbraucher einfließen, damit die erzeugte elektrische Energie aus regenerativen Quellen optimal am wirtschaftlich sinnvollsten eingesetzt wird.

Die hierbei herrschenden Temperaturen des Gasstromes werden durch Erwärmung mittels beispielsweise Reformer, Heater oder partielle Oxidation auf 450°C bis 1200°C, bevorzugt 600°C bis 1200°C insbesondere 700°C bis 900°C eingestellt und dann in den Direktreduktionsprozess eingeführt, um dort eine chemische Reaktion durchzuführen. Auch der Gasstrom, welcher den Direktreduktionsprozess verlässt, kann in den Prozess als kohlenstoff- bzw. wasserstoffhältiger Gasstrom rückgeführt werden.

Die sich hieraus ergebenden möglichen erfindungsgemäßen Zwischenprodukte sind HBI, HDRI oder CDRI.

Hierbei werden Überdrücke von 0 bar bis 15 bar eingestellt.. Beispielsweise sind Überdrücke von ca. 1,5 bar beim MIDREX Verfahren und etwa 9 bar bei Energiron bevorzugt.

Bei der Vermischung des regenerativ erzeugten Wasserstoffs mit kohlenstoff- bzw. wasserstoffhältigen Gasströmen, kann der Kohlenstoffgehalt idealerweise eingestellt werden, und zwar auf 0,0005 % bis 6,3 %, bevorzugt 1 % bis 3 % und direkt als C oder Fe₃C im Zwischenprodukt eingebaut sein. Ein solches Zwischenprodukt ist im Kohlenstoffgehalt ideal eingestellt und besonders gut zur Weiterverarbeitung geeignet da es den notwendigen Kohlenstoffgehalt für den metallurgischen Prozess beisteuert.

In einer bevorzugten Ausführungsform kann zum Ausgleich von kurzfristigen Schwankungen bei der Erzeugung der erneuerbaren Energie diese in Form von Wasserstoff gespeichert werden, wenn diese im Überschuss vorhanden ist. Diese Speicherung kann beispielsweise in einem Gasometer erfolgen. Ein solcher Speicher wird dann bei Schwankungen genützt. Kurzfristige Schwankungen können vorhersehbar z.B. bei Solaranlagen in der Nacht oder unvorhersehbar wie z.B. Windstärkenschwankungen bei Windkraftanlagen auftreten.

Längerfristige Schwankungen welche unter anderem durch die unterschiedlichen Jahreszeiten sich ergeben können, können bevorzugt in die Energiespeicherung in Form von HBI erfolgen.

Eine andere Möglichkeit des Ausgleichs von Schwankungen kann in der variablen Nutzung von Erdgas liegen. Vorteilhafterweise lässt sich damit der thermische Zustand der Anlage stabil halten.

Ein weiterer Vorteil der Erfindung liegt in der räumlichen Entkopplung der Orte der Herstellung der regenerativen Energie und der Nutzung dieser gespeicherten Energie. Beispielsweise werden Solaranlagen eher in sonnenbegünstigten, wärmeren Gegenden mit viel Platz errichtet, wohingegen Stahlwerke oftmals in der Nähe von Flüssen oder Meeren zu finden sind. Da die produzierte Energie beispielsweise in HBI gespeichert vorliegt ist diese leicht und effizient zu transportieren.

## Patentansprüche

1. Verfahren zum Speichern diskontinuierlich erzeugter, regenerativer Energie, wobei die diskontinuierliche erzeugte regenerative Energie elektrische Energie ist, wobei
mit der elektrischen Energie Wasserstoff erzeugt wird, **dadurch gekennzeichnet, dass**
mit dem Wasserstoff, aus einem Ausgangsstoff ein speicherbares Zwischenprodukt erzeugt wird und das speicherbare Zwischenprodukt solange gespeichert wird, bis es zur Herstellung eines Endprodukts benötigt und abgerufen wird, , wobei das Zwischenprodukt ein im direktreduktionsverfahren gewonnenes Eisenmaterial ist. und der Ausgangsstoff Eisenerz mit Wasserstoff und kohlenstoff- bzw. wasserstoffhältigen Gasströmen reduziert wird und das so gewonnene Zwischenprodukt aus reduziertem Eisenerz und gegebenenfalls Begleitstoffen metallurgisch weiterverarbeitet wird, wobei der Wasserstoff durch Elektrolyse von Wasser erzeugt ist, wobei die zur Elektrolyse notwendige elektrische Energie regenerative Energie ist, welche aus Wasserkraft und/oder Windkraft und/oder Fotovoltaik oder anderen regenerativen Energieformen stammt,
wobei das kohlenstoff- bzw. wasserstoffhältige Gas Methan oder andere Kohlenstoffträgergase aus der Biogaserzeugung oder der Pyrolyse nachwachsender Rohstoffe sind und wobei
- wobei am Ort der Erzeugung des Wasserstoffs eine Direktreduktionsanlage betrieben wird, in der aufbereitete Eisenerze direkt reduziert werden.
- der Wasserstoff und das Zwischenprodukt unabhängig von der momentanen Nachfrage immer dann erzeugt wird, wenn ausreichend regenerativ erzeugte elektrische Energie vorhanden ist, wobei
- nicht nachgefragtes Zwischenprodukt bis zur Nachfrage/Verwendung gelagert wird, so dass auch die regenerative Energie, die darin gespeichert ist, gelagert wird, wobei -
das Verhältnis zwischen Wasserstoff aus regenerativer Herstellung und kohlenstoff- bzw. wasserstoffhältigen Gasströmen nach Verfügbarkeit kontinuierlich variiert wird, wobei bei ausreichenden regenerativen Energie Wasserstoff aus der Erzeugung mit regenerativer Energie eingesetzt wird und beim Ausbleiben von diskontinuierlich erzeugter regenerativer Energie auf kohlenstoff- bzw. wasserstoffhältige Gasströme aus kontinuierlich erzeugter regenerativer Energie umgestellt wird.

2. Verfahren nach Anspruch 1, **dadurch gekennzeichnet, dass** bei der Reduktion des Eisenerzes zum Zwischenprodukt, dem Wasserstoff ein kohlenstoff- bzw. wasserstoffhältiges Gas zugesetzt wird, um im Reduktionsprozess als Kohlenstoff in verschiedenen Modifikationen im Zwischenprodukt eingebaut zu werden.

3. Verfahren nach einem der Ansprüche 1 bis 2, **dadurch gekennzeichnet, dass** dem Wasserstoff zur Reduktion mindestens so viel kohlenstoff- bzw. wasserstoffhältiges Gas in verschiedenen Modifikation zugesetzt wird, dass der Kohlenstoffgehalt im Zwischenprodukt 1 Masse-% bis 3-% Masse beträgt.

4. Verfahren nach einem der Ansprüche 1 bis 3, **dadurch gekennzeichnet, dass** das Reduktionsgas aus Wasserstoff und gegebenenfalls kohlenstoff- bzw. wasserstoffhältiges Gas mit 450°C bis 1200 °C, bevorzugt 600°C bis 1200 °C, insbesondere 700°C bis 900°C in den Reduktionsprozess eingeführt wird.

5. Verfahren nach einem der Ansprüche 1 bis 4, **dadurch gekennzeichnet, dass** der Überdruck bei der Reduktion zwischen 0 bar und 15 bar beträgt.

6. Verfahren nach einem der Ansprüche 1 bis 5, **dadurch gekennzeichnet, dass** die Einstellung der Gehalte an Wasserstoff und/oder kohlenstoff- bzw. wasserstoffhältigen Gasströmen im Gesamtgasstrom über eine Prognosesteuerung erfolgt, wobei mit der Prognosesteuerung der prognostizierte Anfall/Erzeugungsmenge von Wasserstoff und/oder regenerativer Energie und/oder kohlenstoff- bzw. wasserstoffhältigen Gasströmen aus der Biogassynthese oder der Vergasung von nachwachsenden Rohstoffen gemessen wird und/oder Wettervorhersagen in die Abschätzung regenerativer Energie einfließen.

7. Verfahren nach einem der Ansprüche 1 bis 6, **dadurch gekennzeichnet, dass** der nahezu gesamte Gasstrom, der die Direktreduktionsanlage verlässt in den Prozess als kohlenstoff- bzw. wasserstoffhältiger Gasstrom rückgeführt wird.

## Claims

1. Method for storing discontinuously produced renewable energy, wherein the discontinuously produced renewable energy is electrical energy, wherein
hydrogen is produced with the electrical energy, **characterised in that**
a storable intermediate product is produced from a starting material using the hydrogen, and the storable intermediate product is stored until it is required and retrieved to manufacture an end product, , wherein the intermediate product is an iron material obtained in a direct reduction method and the starting material is iron ore reduced with hydrogen and carbon-containing or hydrogen-containing gas fluxes, and the thus-obtained intermediate product of reduced iron ore and optionally accompanying substances is treated metallurgically, wherein the hydrogen is produced by electrolysis of water, wherein the electrical energy required for electrolysis is renewable energy which stems from hydroelectric power and/or wind power and/or photovoltaics or other renewable energy forms,
wherein the carbon-containing or hydrogen-containing gas is methane or other carbon carrier gases from biogas production or from the pyrolysis of renewable raw materials, and
- wherein a direct reduction plant is operated at the hydrogen production site, in which plant treated iron ores are reduced directly,
- the hydrogen and the intermediate product are produced, irrespective of current demand, only when there is sufficient renewably produced electrical energy, wherein
- intermediate product which is not in demand is stored until demand/use, with the result that the renewable energy stored therein is also stored, wherein -
the ratio between hydrogen from renewable manufacturing and carbon-containing or hydrogen-containing gas fluxes varies continuously, depending on availability, wherein, when there is sufficient renewable energy, hydrogen from production with renewable energy is used, and when there is insufficient discontinuously produced renewable energy, a change over is made to carbon-containing or hydrogen-containing gas fluxes from continuously produced renewable energy.

2. Method according to claim 1, **characterised in that**, when the iron ore is being reduced to the intermediate product, a carbon-containing or hydrogen-containing gas is added to the hydrogen in order to be incorporated in the intermediate product in the reduction process as carbon in different modifications.

3. Method according to one of claims 1 to 2, **characterised in that** at least enough carbon-containing or hydrogen-containing gas is added to the hydrogen for reduction in different modification for the carbon content in the intermediate product to be 1 m/m% to 3 %m/m.

4. Method according to one of claims 1 to 3, **characterised in that** the reduction gas of hydrogen and optionally carbon-containing or hydrogen-containing is introduced into the reduction process at 450°C to 1200 °C, preferably 600°C to 1200 °C, in particular 700°C to 900°C.

5. Method according to one of claims 1 to 4, **characterised in that** the overpressure during reduction is between 0 bar and 15 bar.

6. Method according to one of claims 1 to 5, **characterised in that** the amounts of hydrogen and/or carbon-containing or hydrogen-containing gas fluxes in the overall gas flux is set using forecasting control, wherein the forecast formation/produced quantity of hydrogen and/or renewable energy and/or carbon-containing or hydrogen-containing gas fluxes from biogas synthesis or gasification of renewable raw materials is measured with forecasting control, and/or weather forecasts feed into the assessment.

7. Method according to one of claims 1 to 6, **characterised in that** almost the entire gas flux which leaves the direction reduction plant is returned to the process as carbon-containing or hydrogen-containing gas flux.

## Revendications

1. Procédé de stockage de l'énergie renouvelable produite en discontinu, dans lequel l'énergie renouvelable produite en discontinu est de l'énergie électrique, dans lequel
de l'hydrogène est produit avec l'énergie électrique, **caractérisé en ce que**
avec l'hydrogène, un produit intermédiaire stockable est produit à partir d'une substance de départ et le produit intermédiaire stockable est stocké jusqu' à ce qu'il soit requis et prélevé pour la fabrication d'un produit final, le produit intermédiaire étant un matériau ferreux obtenu par un procédé de réduction directe et la substance de départ, du minerai de fer, étant réduite avec de l'hydrogène et des courants gazeux contenant du carbone ou de l'hydrogène et le produit intermédiaire ainsi obtenu à partir de minerai de fer réduit et éventuellement de substances d'accompagnement étant transformé par voie métallurgique, l'hydrogène étant produit par électrolyse de l'eau, l'énergie électrique nécessaire à l'électrolyse étant une énergie renouvelable qui provient de l'énergie hydraulique et/ou de l'énergie éolienne et/ou de l'énergie photovoltaïque ou d'autres formes d'énergie renouvelable,
le gaz contenant du carbone ou de l'hydrogène étant du méthane ou d'autres gaz porteurs de carbone provenant de la production de biogaz ou de la pyrolyse de matières premières renouvelables et
- une installation de réduction directe étant exploitée sur le lieu de production de l'hydrogène, dans laquelle les minerais de fer traités sont directement réduits.
- l'hydrogène et le produit intermédiaire sont toujours produits, indépendamment de la demande momentanée, lorsqu'il y a suffisamment d'énergie électrique produite de manière renouvelable, dans lequel
- le produit intermédiaire non demandé est stocké jusqu'à la demande/utilisation, de sorte que l'énergie renouvelable qui y est stockée est également stockée, dans lequel -
le rapport entre l'hydrogène issu d'une production renouvelable et les flux de gaz contenant du carbone ou de l'hydrogène est modifié en continu en fonction de la disponibilité, l'hydrogène issu de la production avec de l'énergie renouvelable étant utilisé lorsque l'énergie renouvelable est suffisante et les flux de gaz contenant du carbone ou de l'hydrogène issus de l'énergie renouvelable produite en discontinu étant utilisés en l'absence d'énergie renouvelable produite en continu d'énergie renouvelable.

2. Procédé selon la revendication 1, **caractérisé en ce que**, lors de la réduction du minerai de fer en produit intermédiaire, un gaz contenant du carbone ou de l'hydrogène est ajouté à l'hydrogène pour être incorporé dans le produit intermédiaire sous forme de carbone dans différentes modifications lors du processus de réduction.

3. Procédé selon l'une des revendications 1 à 2, **caractérisé en ce que** l'on ajoute à l'hydrogène pour la réduction au moins suffisamment de gaz contenant du carbone ou de l'hydrogène dans différentes modifications pour que la teneur en carbone dans le produit intermédiaire soit de 1 % en masse à 3 % en masse.

4. Procédé selon l'une des revendications 1 à 3, **caractérisé en ce que** le gaz réducteur constitué d'hydrogène et éventuellement de gaz contenant du carbone ou de l'hydrogène est introduit dans le processus de réduction à une température de 450 °C à 1200 °C, de préférence de 600 °C à 1200 °C, en particulier de 700 °C à 900 °C.

5. Procédé selon l'une des revendications 1 à 4, **caractérisé en ce que** la surpression lors de la réduction est comprise entre 0 bar et 15 bars.

6. Procédé selon l'une des revendications 1 à 5, **caractérisé en ce que** le réglage des teneurs en hydrogène et/ou en flux gazeux contenant du carbone ou de l'hydrogène dans le flux gazeux total s'effectue par l'intermédiaire d'une commande de prévision, la commande de prévision permettant de mesurer la production/quantité de production prévisionnelle d'hydrogène et/ou d'énergie renouvelable et/ou de flux gazeux contenant du carbone ou de l'hydrogène provenant de la synthèse de biogaz ou de la gazéification de matières premières renouvelables et/ou d'intégrer des prévisions météorologiques dans l'estimation de l'énergie renouvelable.

7. Procédé selon l'une quelconque des revendications 1 à 6, **caractérisé en ce que** la quasitotalité du flux gazeux sortant de l'installation de réduction directe est recyclée dans le processus sous forme de flux gazeux contenant du carbone ou de l'hydrogène.
